# EUROPEAN PATENT APPLICATION

(11) **EP 3 517 227 A1**
(43) Date of publication of application: **31.07.2019**
(21) Application number: 19153394.2
(22) Date of filing: 23.01.2019
(51) Int. Cl.: B09C 1/02, B09C 1/06

(54) **METHOD AND APPARATUS FOR TREATING SOILS, MUDS AND EARTHS CONTAINING HYDROCARBONS**

(30) Priority: 25.01.2018 IT 201800001809
(71) Applicant: Water And Soil Remediation S.r.l., 46010 Curtatone, Frazione Levata MN (IT)
(72) Inventor: PRANDI, Alberto, 46100 Mantova (IT); BRESOLIN, Giampaolo, Guia de Isora, Tenerife (ES)
(74) Representative: Modiano, Micaela Nadia

(57) **Abstract**

A method for the separation of hydrocarbons from matrices, such as soils, muds and earths, which are contaminated by hydrocarbons.

## Description

The present invention relates to a method and an apparatus for treating matrices, such as for example soils, muds and earths, which are contaminated with hydrocarbons.

More specifically, the present invention relates to a method and an apparatus that make it possible to separate hydrocarbons, including heavy hydrocarbons, hereinafter also referred to as oils or oil, from matrices that are solid, gravelly, sandy, earthy and otherwise, including liquid and semisolid sludges, hereinafter generally referred to as "contaminated matrices", thus cleaning such matrices of oily pollutants and making it possible to recover most of the oil contained in them.

Often the contaminated matrices reach concentrations of well above 10% total hydrocarbons and they can approach 100% in what is known in the oil sector jargon as "sludge". It is estimated that in the principal petroleum extraction sites and refining centers there are sludges and buildups of soils impregnated by hydrocarbons amounting to several hundred million cubic meters, in situations presenting an acute risk of compromising the quality of the air, soil, and surface and underground water, as well as problems of natural migration of the pollutant to the surrounding lands and waters.

The methods most used nowadays to remedy these situations of acute environmental damage are based on processes of biodegradation or thermal desorption.

Such methods however exhibit some limitations which reduce their efficacy and economic value. In fact, biodegradation is not capable of recovering and restoring the calorific value contained in soil/mud/pools impregnated by hydrocarbons, while thermal desorption, given the high temperatures reached, results in soil that is agriculturally inactive and entails a high consumption of energy.

The aim of the present invention is therefore to eliminate the above mentioned drawbacks in the conventional methods for treating matrices contaminated by hydrocarbons, by providing a new method that enables the remediation of such matrices and enables the majority recovery of the oils contained in them.

Within this aim, an object of the invention is to provide a versatile method that can be applied to the remediation of different contaminated matrices such as for example earths, muds and pools.

Another object of the present invention is the restoration of lands that are still active, and not sterilized by exposure to high temperatures.

Another object of the present invention is to provide a process that is environmentally sustainable.

Another object of the present invention is to provide a process that is low cost in terms of the energy needs required for the remediation.

Finally, an object of the present invention is to provide an apparatus for carrying out the method described herein that is highly reliable, easy to implement and low cost.

This aim and these and other objects which will become better apparent hereinafter are achieved by a method for treating a contaminated matrix comprising hydrocarbons and inorganic solids, said method comprising the steps of:
a) heating and dispersing the contaminated matrix in water at a temperature between 50°C and 110°C and keeping said matrix at said temperature so as to desorb the hydrocarbons from the contaminated matrix;
b) allowing a three-phase separation of the matrix dispersed in water by sedimentation, so as to form an oily phase comprising the hydrocarbons, an aqueous phase, and a solid phase comprising the inorganic solids.

The objects of the present invention are also achieved by an apparatus for the treatment of an earthy matrix comprising hydrocarbons, water and inorganic solids, said apparatus comprising:
- a vessel adapted to heat and disperse the matrix in water at a temperature comprised between 50°C and 110°C and to keep the matrix dispersed in water at said temperature, the vessel being associated with means for introducing the matrix and the water and with means for heating.

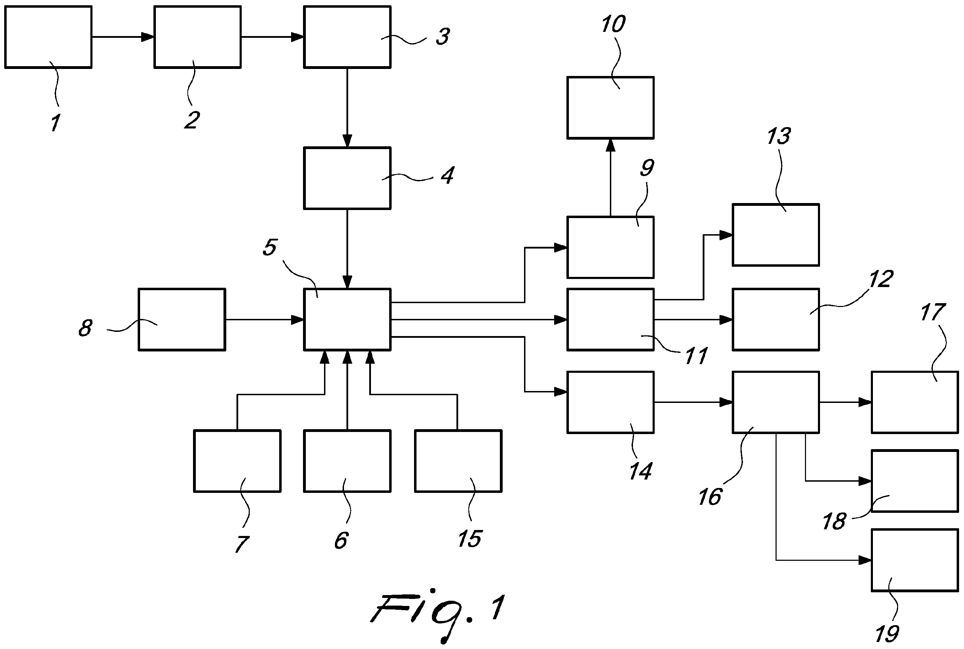

Further characteristics and advantages of the invention will become better apparent from the detailed description that follows of the method and from the description of a preferred, but not exclusive, embodiment of the apparatus according to the invention, which is illustrated by way of nonlimiting example in the accompanying Figure 1 which is a block diagram of an apparatus that carries out the process of the invention according to a particular embodiment.

In a first aspect, the present invention relates to a method for treating a contaminated matrix comprising hydrocarbons and inorganic solids.

The process can be applied to numerous sites contaminated by light, medium and heavy hydrocarbons, existing not only proximate to oil fields, but also at processing and refining facilities as well as at large-scale distribution centers and in general at all sites where prolonged spreads and/or losses have occurred of large quantities of hydrocarbons, for example crude oil, diesel oils and fuel oils, sludges and other processing residues.

In the context of the present invention, the term "contaminated matrix" means any solid, gravelly, earthy, or non-earthy matrix, and liquid and semisolid sludges, such as for example soils, muds and earths, that are contaminated by hydrocarbons.

In the context of the present invention, the terms "hydrocarbons", "oil" and "oils" refer to one or more organic compounds that contain only carbon and hydrogen atoms. Such compounds can be aliphatic, saturated, unsaturated, or aromatic. The hydrocarbons present in contaminated matrices treated by way of the method and apparatus of the present invention can be light, medium or heavy hydrocarbons and can be solid or semisolid (for example the constituents of asphalt, bitumen and paraffin waxes) or liquid (for example the constituents of petroleum, benzene, hexane, octane etc.).

The method according to the invention comprises the steps of:
a) heating and dispersing the contaminated matrix in water at a temperature between 50°C and 110°C and keeping the matrix at said temperature so as to desorb the hydrocarbons from the contaminated matrix;
b) allowing a three-phase separation of the matrix dispersed in water by sedimentation, so as to form an oily phase comprising the hydrocarbons, an aqueous phase, and a solid phase comprising the inorganic solids.

The method according to the invention, as a function of the weaving and composition characteristics of the contaminated matrix and of the chemical/physical bonds between its particles and the contaminant hydrocarbons, can further comprise one or more further steps of treatment which are described below.

In an embodiment of the method according to the invention, there is a step of preheating the contaminated matrix to a temperature not higher than 110°C by way of the injection of heated water and/or steam into the matrix. The preheating by way of the injection of heated water and/or steam into the matrix can take place in the apparatus, or near the place where the matrix is present, for example a contaminated mud or soil deposit.

In contaminated matrices in which bonds between the oily contaminants and the particles of the matrix are particularly strong, the method of the present invention can comprise the additional step of subjecting the matrix dispersed in water in step a) to a treatment with water under pressure at a temperature of up to 160°C.

The contaminated matrix may contain hard, cohesive blocks, whose treatment in a bath of hot water may be slow. In order to overcome this problem, in an embodiment the contaminated matrix is comminuted and then filtered in order to retain any cumbersome foreign objects present in it.

The method according to the invention can further comprise the step of subjecting the matrix dispersed in water to a forced circulation, in order to favor the kinetics of liquefaction, desorption and decomposition of the blocks of agglomerate material of the matrix proper.

In order to facilitate the gravimetric separation of the three phases resulting from the liquefaction and desorption of the hydrocarbons in the contaminated matrix, the method according to the invention can further comprise the step of damping convective motions of the matrix dispersed in water which are induced by the heating and any forced motions of the matrix dispersed in water which are induced by the forced circulation.

Gravimetric separation results in the formation of three phases: an oily phase that comprises, and preferably is constituted substantially by, hydrocarbons and in which there may be residues, such as water drops, sand grains and possibly also a silty fraction borne along with the hydrocarbons; an aqueous phase that comprises, and preferably is constituted substantially by, water and which may contain residues of hydrocarbons and/or solid particles; and a solid phase that comprises, and preferably is constituted substantially by, inorganic solids which may be impregnated with hydrocarbons residues.

The method according to the invention can further comprise the step of purifying and drawing the hydrocarbons from the oily phase. The purification is especially targeted at the separation of any water drops, sand grains and possibly of part of the silty fraction, i.e. the residues that may have been borne along in the oily phase with the oil.

The method according to the invention can further comprise the step of subjecting the solid phase and/or the aqueous phase to microvibrations by way of ultrasound beams, so as to promote the separation of any hydrocarbons that have remained in the solid phase and/or in the aqueous phase. In particular the treatment with ultrasound is targeted at activating both micro-bubbles within the aqueous phase, increasing its scrubbing power and driving away further oily fractions, and also microvibrations of the solid particles of the matrix, boosting the action of abrading and separation thereof from the contaminant hydrocarbons.

In an embodiment, the method according to the invention further comprises the step of drawing the water from the aqueous phase and subjecting it to one or more treatments selected from flotation and biological percolation.

In the flotation process, the fine solid particles soaked in oil, which may have remained in the water, are brought to the surface by micro-bubbles, with the result of clarifying the water and making it suitable for being recycled, for example for use in the step of heating and dispersion of the contaminated matrix, after restoring the temperature.

The waters recovered from the aqueous phase, with or without flotation, can also be cooled and then treated by biological percolation, until the preset quality objectives for effluent are reached.

The method according to the invention can further comprise supplementary treatments of the solid phase that are adapted to decrease the absorption coefficient of the hydrocarbons and of the water therein and to separate further quantities of hydrocarbons from solid particles.

In particular, the method according to the invention can further comprise the step of subjecting the inorganic solids of the solid phase to abrading, already during the decanting that takes place after the gravimetric separation, before a subsequent step of extraction. After the extraction, the inorganic solids of the solid phase can then be subjected to one or more additional treatments selected from mechanical compression, heating to a temperature of 200°C followed by vaporization at a pressure lower than atmospheric pressure, and purification by way of a biological treatment.

In a second aspect, the present invention relates to an apparatus for treating a contaminated matrix comprising hydrocarbons and inorganic solids.

With reference to Figure 1, the apparatus comprises a vessel 5, hereinafter also referred to as a "liquefaction/desorption cell", which is adapted to heat and disperse the matrix in water at a temperature comprised between 50°C and 110°C and keep the matrix dispersed in water at the aforementioned temperature. The vessel is associated with introducing means 4 for introducing the matrix and the water, and heating means 6.

The liquefaction/desorption cell (vessel 5) is the part of the apparatus where the oil/water/inorganic solid three-phase separation process takes place.

The introducing means 4 comprise for example a loading hopper, which enables the entry of the contaminated matrix through sub-vertical or oblique partitions for conveying the material to the underlying vessel 5. Preferably, the loading hopper is kept closed by an adapted cover during the break between one load and another, for the purpose of limiting emissions into the atmosphere.

The heating means 6 associated with the vessel 5 comprise for example a pipe coil for supplying heat. In an embodiment, the perimeter of the vessel 5 is covered by the pipe coil for supplying heat, for all the lateral extension of the vessel and for a depth such as to ensure the complete liquefaction and desorption. A heating fluid flows inside the heating pipe coil and can be diathermic oil or superheated water or another fluid, kept at an entry temperature that is such as to obtain the desired temperature in the vessel 5.

The heating means 6 can further comprise a microwave generator, in order to provide a supplementary heating to the fluids present in the vessel 5 by way of the application of microwaves.

In an embodiment, the apparatus further comprises preheating means 1 adapted to inject preheated water or steam into the contaminated matrix at a temperature not higher than 110°C.

The apparatus can further comprise one or more feeding devices 2 which are adapted to withdraw and bring the contaminated matrix, into which hot water or steam has optionally been injected, to the vessel 5. Such feeding devices 2 can be differentiated as a function of the composition of the contaminated matrix and of the distance of its site of origin from the apparatus, for example a wheeled or tracked excavator/loader when the distances between the contaminated matrix and the apparatus are small, for the purpose of limiting the use of trucks or other conveyance systems. The type of mechanical excavator/loader, wheeled or tracked, is selected as a function of the possibility to access the basin containing the contaminated matrix, of the load-bearing capacity of the soil in the various portions, and of the distances to be traveled. Alternatively, if there are great quantities of contaminated matrices to be processed and if the apparatus has a high capacity, the devices for feeding can be automated systems with bucket loaders and conveyor belts and elevators, which are capable of withdrawing the quantities of contaminated matrix necessary to the preset capacity for feeding the apparatus.

The apparatus can further comprise breaking means 3 adapted to comminute the contaminated matrix. Such breaking means 3 can be associated with the feeding devices 2 and can for example comprise rotating paddle wheels, a milling cutter tool or equivalent tool. The breaking means 3 are geared especially to comminuting any hard, cohesive blocks, whose treatment in the hot bath may be slow. The breaking means 3 can likewise be provided with a coarse grille designed to retain the cumbersome foreign objects that may be present in the contaminated matrix.

In an embodiment, the apparatus further comprises a system for forced circulation 7, comprising at least one circulation duct, a circulation pump and a heat exchanger. The system for forced circulation 7 subjects the matrix dispersed in water to a forced circulation inside the vessel 5, to the purpose of favoring the kinetics of liquefaction, desorption and decomposition of the blocks of agglomerate material present of the matrix.

Once the liquefaction and the desorption of the hydrocarbons from the contaminated matrix have been achieved, then in order to facilitate the gravimetric separation of the three phases resulting from the liquefaction and desorption that took place in the vessel 5, the apparatus can enter a placid condition by way of one or more devices for damping 8, mainly grilles, geared to damp the convective motions and the forced motions induced in the first part of the apparatus respectively by the heating of the contaminated matrix and by the forced circulation.

Obviously, the apparatus of the invention can further comprise adapted instrumentation for monitoring the process parameters, which comprises for example a series of temperature, pressure and interface sensors, which is installed in meaningful zones of the apparatus, for the purpose of providing an adequate monitoring of the process. The monitoring instrumentation is equipped with means for transmitting the parameters of the process and some of its components are controlled by an automatic system for adjusting the process parameters.

In an embodiment, the apparatus further comprises means for purifying 9 the hydrocarbons of the oily phase, for the purification treatment of the oil, especially targeted at the separation of any water drops, sand grains and possibly of part of the silty fraction, which have been borne along with the oil proper in the oily phase after the phase separation following the liquefaction/desorption.

In an embodiment, the apparatus further comprises means for drawing 10 the hydrocarbons from the oily phase. The drawing of the oil occurs from the top of the vessel 5; and preferably it is controlled so as to maintain inside the vessel 5 a thickness of supernatant oil that is as constant as possible, and in its migration toward the drawing-point it can be subjected to a stage of coalescence by way of adapted grille packs and/or interceptor plates (Parallel Plate Interceptors, Corrugated Plate Interceptors or equivalent).

In an embodiment, the apparatus further comprises means for drawing 11 the water from the aqueous phase. The drawing of the water occurs from the central part of the vessel 5. Similarly to the requirement indicated for the oil, the drawing of the water is also controlled so as to ensure stability at the "oil piezometry" and oil/water interfaces. The water can also be subjected to a stage of coalescence for both the oil and solid particles.

In an embodiment, the apparatus further comprises a flotation cell 12 in order to allow the fine solid particles soaked in oil, which may be present in the water originating from the aqueous phase, to be brought to the surface by micro-bubbles, with the result of clarifying the water and making it suitable for being recycled, for example for use in the step of heating and dispersion of the contaminated matrix, after restoring the temperature used to carry out the aforementioned step of the process.

In an embodiment, the apparatus further comprises a biological percolator 13, for the treatment of the waters originating from the aqueous phase, whether or not they have been subjected to flotation, until the preset quality objectives for effluent are reached.

The solid material that precipitates below the liquefaction/desorption cell 5 can still be impregnated by oil, in which case an adapted abrading treatment is advisable at an earlier point along the path of displacement toward the bottom of the vessel from which it is subsequently extracted. Therefore, in an embodiment the apparatus further comprises means for abrading and displacing 14 the inorganic solids, such as for example one or more helical vanes operating along the entire length of the vessel 5.

In an embodiment the apparatus can further comprise an ultrasound generator 15, adapted to subject the solid phase and/or the aqueous phase to microvibrations by way of ultrasound beams. The microvibration of the aqueous phase and of the sediments by way of ultrasound beams is applied directly at the bottom and/or at adapted points of the vessel 5 in order to facilitate the abrading and the washing of the material that flows toward the extraction.

In an embodiment the apparatus can further comprise extraction means for extracting 16 the inorganic solids of the solid phase, in order to extract the sediments accumulated in the end part of the vessel 5. These means for extracting 16 can comprise a screw feeder or other equivalent device.

The sedimented inorganic solids extracted from the vessel can be subjected to supplementary treatments of compression and/or of vaporization.

Therefore, in an embodiment the apparatus further comprises means of mechanical compression 17, for example selected from the group consisting of a filter press, a screw feeder and other adapted mechanical means. The compression to which the solids are subjected is designed to decrease the absorption coefficient of the oil and of the water that may be present therein.

In another embodiment, the apparatus further comprises a vessel 18 adapted to heat the inorganic solids of the solid phase to a temperature up to 200°C and to vaporize the heated inorganic solids at a pressure lower than atmospheric pressure. The sudden (flash) expansion makes it possible to further separate oily fractions from the particles of sediment.

In an embodiment, the apparatus further comprises a purifying system 19, particularly for carrying out biological treatments of the solids. In this manner, the solids are purified to values that are acceptable for the intended residential uses.

The method and the apparatus according to the invention fully achieve the set aim and objects.

In particular, the method of the present invention has the advantage of using water as a means of heating, dispersion, desorption and separation of oil from the contaminated matrix and it makes it possible to contain operating temperatures, to lower than 110°C, for at least the first step of heating and majority recovery of the oil contained in the contaminated matrix.

Furthermore, the method and the apparatus of the invention do not make use of chemical substances or foreign substances in general, but only of physical-mechanical actions and optionally biological actions in the effluent.

In addition, the accelerated purification of the solid component of the contaminated matrix, by virtue of the combined action of abrading, ultrasonic microvibration and/or variations in pressure and temperature, makes it possible to recover soils that are still active, indeed actually improved in terms of humus and humidity content.

The method and the apparatus of the invention also make it possible to avoid the destruction or decomposition of the recovered oil, which can therefore be returned for the most part unaltered to the customer, optionally after sedimentation and decanting when required by the oil input characteristics to the apparatus of the customer.

Furthermore, the method and the apparatus of the invention are extremely versatile and adapted to treat, with a suitable sequence of mechanical actions, any type of oil/water/inorganic soil composition, allocating to chemical treatments or incineration only a minimal residual part of the contaminated matrix that does not respond to the actions described above.

Finally, the low cost and the environmental sustainability of the method ensure the recovery of the polluting oil practically in the unaltered state, without further pollution in the environment and with the maximum recovery of the energy contained in the polluted matrix.

The method and the apparatus, thus conceived, are susceptible of numerous modifications and variations, all of which are within the scope of the appended claims; moreover, all the details may be substituted by other, technically equivalent elements. For example different apparatuses can be used in order to obtain the results of liquefaction, disintegration, sedimentation, centrifugation, microvibration, abrading, and maximized recovery of the oil contained in the contaminated soils/muds. In practice, the materials employed, as well as the dimensions, may be any according to requirements and to the state of the art.

The disclosures in Italian Patent Application No. 102018000001809 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for treating a contaminated matrix comprising hydrocarbons and inorganic solids, said method comprising the steps of:
a) heating and dispersing the contaminated matrix in water at a temperature between 50°C and 110°C and keeping said matrix at said temperature so as to desorb the hydrocarbons from the contaminated matrix;
b) allowing a three-phase separation of the matrix dispersed in water by sedimentation, so as to form an oily phase comprising the hydrocarbons, an aqueous phase, and a solid phase comprising the inorganic solids.

2. The method according to claim 1, **characterized in that** it further comprises one or more of the following steps:
- preheating the matrix to a temperature not higher than 110°C by way of the injection of heated water and/or steam into the matrix,
- comminuting the matrix,
- subjecting the matrix dispersed in water to a forced circulation,
- subjecting the solid phase and/or the aqueous phase to microvibrations by way of ultrasound beams, so as to promote the separation of any hydrocarbons that have remained in the solid phase and/or in the aqueous phase, and
- damping convective motions of the matrix dispersed in water which are induced by the heating and any forced motions of the matrix dispersed in water which are induced by the forced circulation.

3. The method according to claim 1 or 2, **characterized in that** it further comprises one or more of the following steps:
- purifying and drawing the hydrocarbons from the oily phase,
- drawing the water from the aqueous phase and subjecting it to one or more additional treatments selected from flotation and biological percolation, and
- extracting the inorganic solids of the solid phase and subjecting them to one or more additional treatments selected from mechanical compression, heating to a temperature of 200°C followed by vaporization at a pressure lower than atmospheric pressure, and purification by way of a biological treatment.

4. An apparatus for the treatment of a contaminated matrix comprising hydrocarbons, water and inorganic solids, said apparatus comprising: a vessel (5) adapted to heat and disperse the matrix in water at a temperature comprised between 50°C and 110°C and to keep the matrix dispersed in water at said temperature, the vessel being associated with means (4) for introducing the matrix and the water and with means for heating (6).

5. The apparatus according to claim 4, **characterized in that** said means for heating (6) comprise one or more of a microwave generator and a heat application coil.

6. The apparatus according to claim 4 or 5, **characterized in that** it further comprises one or more of the following means:
- preheating means (1) adapted to inject preheated water or steam into the contaminated matrix;
- breaking means (3) adapted to comminute the matrix;
- a system for forced circulation (7), comprising at least one circulation duct, a circulation pump and a heat exchanger;
- an ultrasound generator (15); and
- means for damping (8) the convective motions and the forced motions which comprise at least one grid.

7. The apparatus according to any one of claims 4 to 6, **characterized in that** it further comprises one or more of:
- means for purifying (9) the hydrocarbons of the oily phase;
- means for drawing (10) the hydrocarbons from the oily phase;
- means for drawing (11) the water from the aqueous phase;
- means for treating the aqueous phase, which comprise one or both of a flotation cell (12) and a biological percolator (13);
- means for abrading (14) and moving the inorganic solids;
- means for extracting (16) the inorganic solids of the solid phase, which comprise at least one screw feeder;
- means for mechanical compression (17) of the inorganic solids of the solid phase, which comprise one or both of a screw feeder and a filter press;
- a vessel (18) adapted to heat the inorganic solids of the solid phase to a temperature up to 200°C and to vaporize said heated inorganic solids at a pressure lower than atmospheric pressure; and
- a purifying system (19), adapted to carry out biological treatments of the solids.
